# EUROPEAN PATENT APPLICATION

(11) **EP 4 737 997 A1**
(43) Date of publication of application: **06.05.2026**
(21) Application number: 24832086.3
(22) Date of filing: 28.06.2024
(51) Int. Cl.: G02F 1/1345, G02F 1/13

(54) **WIRING BOARD-EQUIPPED LIGHT CONTROL MEMBER**

(30) Priority: 29.06.2023 JP 2023107251
(71) Applicant: Dai Nippon Printing Co., Ltd., Tokyo 162-8001 (JP)
(72) Inventor: DOKO, Takeyuki, Tokyo 162-8001 (JP)
(74) Representative: Müller-Boré & Partner Patentanwälte PartG mbB
(86) International application number: PCT/JP2024/023478
(87) International publication number: WO 2025/005228

(57) **Abstract**

The wiring-substrate-equipped light modulating member (1) includes a light modulating member (20) and a wiring substrate (10), the light modulating member (20) includes a first electrode-equipped base member (30), a second electrode-equipped base member (40), a liquid crystal layer (21), and a seal member (22), the first electrode-equipped base member (30) includes a first electrode (33), a first base member (31), a first main portion (35), and a first terminal portion (37), and the second electrode-equipped base member (40) includes a second electrode (43), a second base member (41), a second main portion (45), and a second terminal portion (47). In the first terminal portion (37), the first electrode (33) is electrically connected to the first connection portion (14) at a position different from the second terminal portion (47), and in the second terminal portion (47), the second electrode (43) is electrically connected to the second connection portion (16) at a position different from the first terminal portion (37). The substrate (11) of the wiring substrate (10) extends between the first terminal portion (37) and the second terminal portion (47) in plan view of the light modulating member (20).

## Description

### Technical Field

The present disclosure relates to a wiring-substrate-equipped light modulating member including a light modulating member and a wiring substrate.

### Background Art

A light modulating member such as the one described in Patent Literature 1 is known. A light modulating member can change light transmittance. The light modulating member is connected to a wiring of a wiring substrate. The light modulating member is connected to an external electric component through the wiring substrate. The change in light transmittance of the light modulating member is controlled by the electric component.

### Citation List

### Patent Literature

PTL 1: Japanese Unexamined Patent Application Publication No. 8-184273

### Summary of Invention

### Technical Problem

Work of connecting a wiring of a wiring substrate to a light modulating member is sometimes complicated. Accordingly, it takes time to manufacture a wiring-substrate-equipped light modulating member. An object of the present disclosure is to easily connect a wiring of a wiring substrate to a light modulating member.

### Solution to Problem

An embodiment of the present disclosure relates to the following [1] to [15].
[1] A wiring-substrate-equipped light modulating member including:
   a light modulating member; and
   a wiring substrate connected to the light modulating member, in which
   the light modulating member includes a first electrode-equipped base member, a second electrode-equipped base member, a liquid crystal layer located between the first electrode-equipped base member and the second electrode-equipped base member, and a seal member that surrounds the liquid crystal layer,
   the first electrode-equipped base member includes a first electrode that faces the liquid crystal layer and a first base member that supports the first electrode,
   the second electrode-equipped base member includes a second electrode that faces the liquid crystal layer and a second base member that supports the second electrode,
   the light modulating member is capable of adjusting visible light transmittance by changing voltages applied to the first electrode and the second electrode,
   the wiring substrate includes a substrate having a first surface and a second surface opposite to the first surface, a first wiring including a first connection portion provided on the first surface of the substrate, and a second wiring including a second connection portion provided on the second surface of the substrate,
   the first electrode-equipped base member includes a first main portion that faces the liquid crystal layer and a first terminal portion that extends from the first main portion,
   the second electrode-equipped base member includes a second main portion that faces the liquid crystal layer and a second terminal portion that extends from the second main portion,
   in the first terminal portion, the first electrode is electrically connected to the first connection portion at a position different from the second terminal portion in plan view of the light modulating member,
   in the second terminal portion, the second electrode is electrically connected to the second connection portion at a position different from the first terminal portion in plan view of the light modulating member, and
   the substrate extends between the first terminal portion and the second terminal portion in plan view of the light modulating member.
[2] The wiring-substrate-equipped light modulating member according to [1], in which
   a peripheral edge of the first main portion at a position overlapping the second terminal portion and a peripheral edge of the second main portion at a position overlapping the first terminal portion are located on the seal member in plan view of the light modulating member.
[3] The wiring-substrate-equipped light modulating member according to [1] or [2], in which
   a gap is provided between the first terminal portion and the second terminal portion in plan view of the light modulating member.
[4] The wiring-substrate-equipped light modulating member according to any one of [1] to [3], in which
   the substrate has a notch between a position where the first connection portion is provided and a position where the second connection portion is provided.
[5] The wiring-substrate-equipped light modulating member according to any one of [1] to [4], in which
   a peripheral edge of the first terminal portion has a curved shape whose radius of curvature is equal to or more than 1 mm and equal to or less than 3 mm in a portion extending from the first main portion, and
   a peripheral edge of the second terminal portion has a curved shape whose radius of curvature is equal to or more than 1 mm and equal to or less than 3 mm in a portion extending from the second main portion.
[6] The wiring-substrate-equipped light modulating member according to any one of [1] to [5], in which
   the light modulating member further includes a first alignment film located between the first electrode-equipped base member and the liquid crystal layer,
   the first electrode is connected to the first connection portion of the wiring substrate through a first conductive adhesive layer, and
   a resin sphere included in the first conductive adhesive layer breaks through the first alignment film, so that the first electrode and the first connection portion are connected.
[7] The wiring-substrate-equipped light modulating member according to any one of [1] to [6], in which
   a ratio of a sum of a thickness of the substrate and a thickness of the first wiring to a sum of a thickness of the first terminal portion, the thickness of the substrate, and the thickness of the first wiring is equal to or more than 25%, or
   a ratio of a sum of the thickness of the substrate and a thickness of the second wiring to a sum of a thickness of the second terminal portion, the thickness of the substrate, and the thickness of the second wiring is equal to or more than 25%.
[8] A wiring-substrate-equipped light modulating member including:
   a light modulating member; and
   a wiring substrate connected to the light modulating member, in which
   the light modulating member includes a first electrode-equipped base member, a second electrode-equipped base member, a liquid crystal layer located between the first electrode-equipped base member and the second electrode-equipped base member, and a seal member that surrounds the liquid crystal layer,
   the light modulating member includes a plurality of sections that divide a position where the liquid crystal layer is disposed in plan view,
   the first electrode-equipped base member includes a first electrode that faces the liquid crystal layer and a first base member that supports the first electrode,
   the second electrode-equipped base member includes a plurality of second electrodes that face the liquid crystal layer and are independent in the respective sections and a second base member that supports the plurality of second electrodes,
   the light modulating member is capable of adjusting visible light transmittance independently in each of the sections by changing voltages applied to the first electrode and the second electrodes in the respective sections,
   the wiring substrate includes a substrate that has a first surface and a second surface opposite to the first surface, a first wiring including a first connection portion provided on the first surface of the substrate, and a second wiring including a plurality of second connection portions provided on the second surface of the substrate,
   the first electrode-equipped base member includes a first main portion that faces the liquid crystal layer and a first terminal portion that extends from the first main portion,
   the second electrode-equipped base member includes a second main portion that faces the liquid crystal layer and a plurality of second terminal portions that extend from the second main portion in the respective sections,
   in the first terminal portion, the first electrode is electrically connected to the first connection portion at a position different from the plurality of second terminal portions in plan view of the light modulating member, and
   in the plurality of second terminal portions, the plurality of second electrodes are electrically connected to the respective plurality of second connection portions at positions different from the first terminal portion in plan view of the light modulating member.
[9] The wiring-substrate-equipped light modulating member according to [8], in which
   the substrate extends between the first terminal portion and each of the plurality of second terminal portions in plan view of the light modulating member.
[10] The wiring-substrate-equipped light modulating member according to [8] or [9], in which
   the substrate extends between the plurality of second terminal portions in plan view of the light modulating member.
[11] The wiring-substrate-equipped light modulating member according to any one of [8] to [10], in which
   a peripheral edge of the substrate that faces a peripheral edge of the first main portion and a peripheral edge of the second main portion has a linear shape in plan view of the light modulating member.
[12] The wiring-substrate-equipped light modulating member according to any one of [8] to [11], in which
   the first connection portion and the plurality of second connection portions are arranged along one direction.
[13] The wiring-substrate-equipped light modulating member according to any one of [8] to [12], in which
   a maximum width of the substrate is equal to or more than 5 mm and equal to or less than 40 mm.
[14] The wiring-substrate-equipped light modulating member according to any one of [8] to [13], in which
   a ratio of a sum of a thickness of the substrate and a thickness of the first wiring to a sum of a thickness of the first terminal portion, the thickness of the substrate, and the thickness of the first wiring is equal to or more than 25%, or
   a ratio of a sum of the thickness of the substrate and a thickness of the second wiring to a sum of a thickness of the second terminal portion, the thickness of the substrate, and the thickness of the second wiring is equal to or more than 25%.
[15] A wiring-substrate-equipped light modulating member including:
   a light modulating member; and
   a wiring substrate connected to the light modulating member, in which
   the light modulating member includes a first electrode-equipped base member, a second electrode-equipped base member, a liquid crystal layer located between the first electrode-equipped base member and the second electrode-equipped base member, and a seal member that surrounds the liquid crystal layer,
   the light modulating member includes a plurality of sections that divide a position where the liquid crystal layer is disposed in plan view,
   the first electrode-equipped base member includes a plurality of first electrodes that face the liquid crystal layer and a first base member that supports the plurality of first electrodes,
   the second electrode-equipped base member includes a plurality of second electrodes that face the liquid crystal layer and are independent in the respective sections and a second base member that supports the plurality of second electrodes,
   the light modulating member is capable of adjusting visible light transmittance independently for each of the sections by changing voltages applied to the first electrodes and the second electrodes in the respective sections,
   the number of first electrodes is smaller than the number of second electrodes,
   the wiring substrate includes a substrate that has a first surface and a second surface opposite to the first surface, a first wiring including a plurality of first connection portions provided on the first surface of the substrate, and a second wiring including a plurality of second connection portions provided on the second surface of the substrate,
   the first electrode-equipped base member includes a first main portion that faces the liquid crystal layer and a plurality of first terminal portions that extend from the first main portion,
   the second electrode-equipped base member includes a second main portion that faces the liquid crystal layer and a plurality of second terminal portions that extend from the second main portion in the respective sections,
   in the plurality of first terminal portions, the plurality of first electrodes are electrically connected to the plurality of first connection portions at positions different from the plurality of second terminal portions in plan view of the light modulating member, and
   in the plurality of second terminal portions, the plurality of second electrodes are electrically connected to the respective plurality of second connection portions at positions different from the first terminal portion in plan view of the light modulating member.

According to the present disclosure, a wiring of a wiring substrate can be easily connected to a light modulating member.

### Brief Description of Drawings

[Fig. 1] Fig. 1 is a plan view of a wiring-substrate-equipped light modulating member according to a first embodiment.
[Fig. 2] Fig. 2 is a plan view of a wiring substrate according to the first embodiment.
[Fig. 3] Fig. 3 is a cross-sectional view of the wiring-substrate-equipped light modulating member taken along line III-III of Fig. 1.
[Fig. 4] Fig. 4 is an enlarged view of a portion where the light modulating member according to the first embodiment is connected to a wiring of the wiring substrate.
[Fig. 5] Fig. 5 is a cross-sectional view of the wiring-substrate-equipped light modulating member taken along line V-V of Fig. 1.
[Fig. 6] Fig. 6 is a cross-sectional view of the wiring-substrate-equipped light modulating member taken along line VI-VI of Fig. 1.
[Fig. 7] Fig. 7 is a cross-sectional view of the wiring-substrate-equipped light modulating member taken along line VII-VII of Fig. 1.
[Fig. 8] Fig. 8 is a diagram for explaining an example of a method for manufacturing the wiring-substrate-equipped light modulating member according to the first embodiment.
[Fig. 9] Fig. 9 is a diagram for explaining an example of a method for manufacturing the wiring-substrate-equipped light modulating member according to the first embodiment.
[Fig. 10] Fig. 10 is a diagram for explaining an example of a method for manufacturing the wiring-substrate-equipped light modulating member according to the first embodiment.
[Fig. 11] Fig. 11 is a diagram for explaining an example of a method for manufacturing the wiring-substrate-equipped light modulating member according to the first embodiment.
[Fig. 12] Fig. 12 is a plan view of a wiring-substrate-equipped light modulating member according to a second embodiment.
[Fig. 13] Fig. 13 is a plan view of a wiring substrate according to the second embodiment.
[Fig. 14] Fig. 14 is a cross-sectional view taken along line XIV-XIV of Fig. 12.
[Fig. 15] Fig. 15 is a plan view of the first electrode-equipped base member according to the second embodiment.
[Fig. 16] Fig. 16 is a plan view of the second electrode-equipped base member according to the second embodiment.
[Fig. 17] Fig. 17 is a plan view of a wiring-substrate-equipped light modulating member according to a third embodiment.
[Fig. 18] Fig. 18 is a plan view of a wiring substrate according to the third embodiment.
[Fig. 19] Fig. 19 is a cross-sectional view taken along line XIX-XIX of Fig. 17.
[Fig. 20] Fig. 20 is a plan view of a first electrode-equipped base member according to the third embodiment.
[Fig. 21] Fig. 21 is a plan view of a second electrode-equipped base member according to the third embodiment.
[Fig. 22] Fig. 22 is a perspective view of a mobile body including a wiring-substrate-equipped light modulating member.
[Fig. 23] Fig. 23 is a cross-sectional view illustrating a conventional wiring-substrate-equipped light modulating member.

### Description of Embodiments

An embodiment of the present disclosure is described below with reference to the drawings. In the drawings attached to the present specification, scales, dimensional ratios, and the like are changed and exaggerated from actual ones as appropriate for ease of illustration and understanding.

The term "plate surface" refers to a surface that coincides with a planar direction of a target plate-shaped member when the target plate-shaped member is viewed in its entirety and macroscopically. The same applies when "sheet" or "film" is used instead of "plate".

The "plan view" of the plate-shaped member means observing the target plate-shaped member from a direction normal to the plate surface.

In the present specification, terms that specify shapes, geometric conditions, and degrees of the shapes and geometric conditions, such as "parallel", "orthogonal", and "identical", and numerical values such as lengths and angles, are not to be interpreted strictly, but are to be construed to include ranges that allow for similar functions.

Wiring-substrate-equipped light modulating members 1 according to a plurality of embodiments are described below. Corresponding parts in the embodiments are given identical reference signs, and repeated description thereof is omitted.

### <First Embodiment>

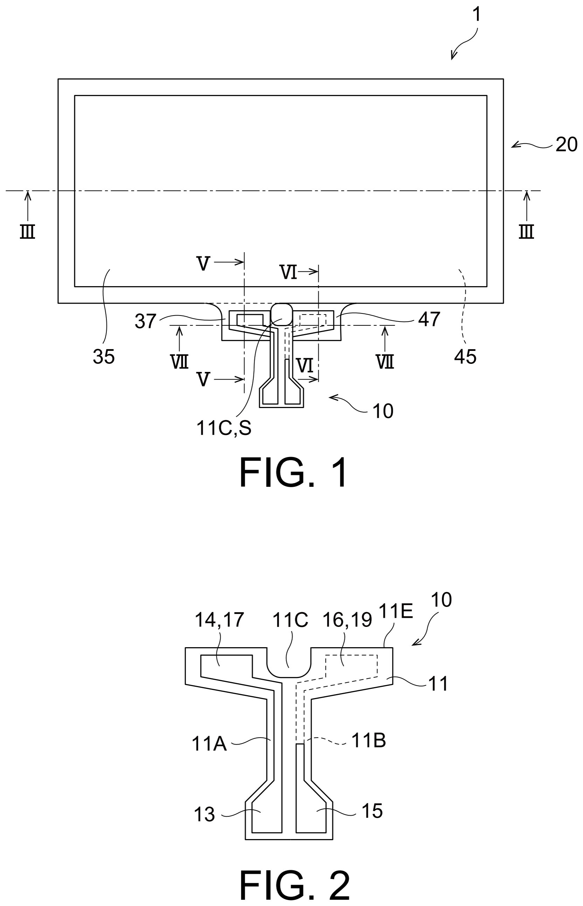

Fig. 1 is a plan view of a wiring-substrate-equipped light modulating member 1 according to the first embodiment. The wiring-substrate-equipped light modulating member 1 includes a light modulating member 20 and a wiring substrate 10. The wiring substrate 10 is connected to the light modulating member 20.

The wiring substrate 10 connects the light modulating member 20 to an electric component such as an external power source. Fig. 2 is a plan view of the wiring substrate 10. As illustrated in Fig. 2, the wiring substrate 10 includes a substrate 11, a first wiring 13, and a second wiring 15. The wiring substrate 10 further includes a first conductive adhesive layer 17 and a second conductive adhesive layer 19.

The substrate 11 supports the first wiring 13 and the second wiring 15. The substrate 11 has a thin plate shape. The substrate 11 has a first surface 11A and a second surface 11B. The second surface 11B is a surface opposite to the first surface 11A. The first surface 11A and the second surface 11B are main surfaces of the substrate 11. The substrate 11 has a shape that conforms to the shapes of the first wiring 13 and the second wiring 15 which the substrate 11 supports. The substrate 11 appropriately supports the first wiring 13 and the second wiring 15, and has a thickness such that the wiring substrate 10 does not become too thick. The thickness of the substrate 11 is, for example, equal to or more than 10 µm and equal to or less than 30 µm. A material of the substrate 11 is, for example, polyimide, modified polyimide, transparent polyimide, liquid crystal polymer, cycloolefin polymer, polyethylene terephthalate, polytetrafluoroethylene, or polyphenylene ether.

The substrate 11 extends between a position where a first connection portion 14 is provided and a position where a second connection portion 16 is provided. As illustrated in Fig. 1, the substrate 11 extends between a first terminal portion 37 and a second terminal portion 47, which will be described later, in plan view of the light modulating member 20. The substrate 11 has a notch 11C between the position where the first connection portion 14 is provided and the position where the second connection portion 16 is provided. A peripheral edge 11E of the substrate 11 that faces a first main portion 35 and a second main portion 45, which will be described later, has a linear shape except for a portion where the notch 11C is provided. Such a wiring substrate 10 can be easily disposed on the light modulating member 20.

The first wiring 13 and the second wiring 15 electrically connect the light modulating member 20 to the external electric component. The first wiring 13 and the second wiring 15 are electrically independent. The first wiring 13 includes the first connection portion 14. The first connection portion 14 is connected to the first terminal portion 37 (described later) of the light modulating member 20. The first connection portion 14 is provided on the first surface 11A of the substrate 11. The second wiring 15 includes the second connection portion 16. The second connection portion 16 is connected to the second terminal portion 47 (described later) of the light modulating member 20. The second connection portion 16 is provided on the second surface 11B of the substrate 11. Although the second wiring 15 is provided on the second surface 11B of the substrate 11 in the second connection portion 16, the second wiring 15 may be provided on the first surface 11A of the substrate 11 in another portion. The second wiring 15 may extend from the second surface 11B to the first surface 11A of the substrate 11, for example, through a through-hole provided in the substrate 11. The first wiring 13 and the second wiring 15 are, for example, made of copper. A thickness of the first wiring 13 and a thickness of the second wiring 15 are, for example, equal to or more than 10 µm and equal to or less than 30 µm. The thickness of the first wiring 13 and the thickness of the second wiring 15 may be identical or may be different.

The first conductive adhesive layer 17 is provided on the first connection portion 14 and connects the first connection portion 14 to the light modulating member 20. More specifically, the first conductive adhesive layer 17 fixes a first electrode 33 and the first connection portion 14 to each other so that the first electrode 33 and the first connection portion 14 are electrically connected in the first terminal portion 37 (described later) of the light modulating member 20. The second conductive adhesive layer 19 is provided on the second connection portion 16 and connects the second connection portion 16 to the light modulating member 20. More specifically, the second conductive adhesive layer 19 fixes a second electrode 43 and the second connection portion 16 to each other so that the second electrode 43 and the second connection portion 16 are electrically connected in the second terminal portion 47 (described later) of the light modulating member 20. The first conductive adhesive layer 17 and the second conductive adhesive layer 19 are, for example, anisotropic conductive films (ACFs), anisotropic conductive paste (ACP), or anisotropic conductive adhesives (ACAs).

The light modulating member 20 can adjust visible light transmittance. The visible light transmittance which the light modulating member 20 can take is, for example, equal to or more than 2% and equal to or less than 40%. The light modulating member 20 is electrically connected to the external electric component through the wiring substrate 10. The light modulating member 20 is a plate-shaped member. A thickness of the light modulating member 20 is, for example, equal to or more than 0.1 mm and equal to or less than 0.5 mm. The light modulating member 20 can be, for example, applied to a member that partitions a space. Specifically, the light modulating member 20 is used as a window or a windshield device of a mobile body such as an automobile, a train, a ship, or an airplane, a transparent part of a partition member such as a part of a window or a partition of an exterior wall, an interior wall, a door, or the like of a building, or a sun visor of a mobile body such as an automobile. The light modulating member 20 is pasted on a transparent member such as glass or is held between transparent members such as glass. The light modulating member 20 has a rectangular shape in plan view in the example illustrated in Fig. 1, the light modulating member 20 may have any shape.

In the present specification, the visible light transmittance is specified as an average value of total light transmittance at each wavelength, measured at 1 nm intervals within a wavelength range from 380 nm to 780 nm by using a spectrophotometer ("UV-3600i Plus" produced by Shimadzu Corporation, which is a product compliant with JIS K0115). An incident angle during measurement of the visible light transmittance is set to 0° in a case where no specific transmission direction is defined. The incident angle is an angle of a traveling direction of incident light with respect to a direction normal to an incident surface and is a value less than 90°.

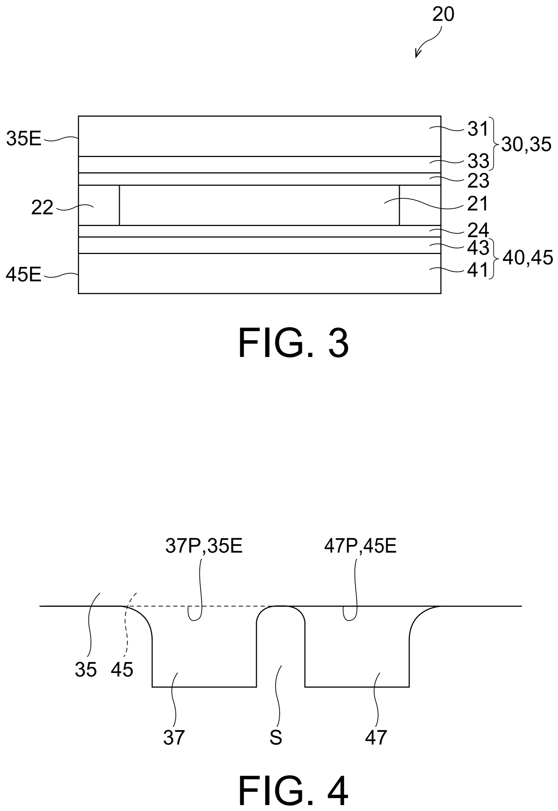

Fig. 3 is a cross-sectional view of the light modulating member 20 in the wiring-substrate-equipped light modulating member 1 taken along line III-III of Fig. 1. As illustrated in Fig. 3, the light modulating member 20 includes a first electrode-equipped base member 30, a second electrode-equipped base member 40, a liquid crystal layer 21, and a seal member 22. The liquid crystal layer 21 is located between the first electrode-equipped base member 30 and the second electrode-equipped base member 40. The seal member 22 surrounds the liquid crystal layer 21. In the example illustrated in Fig. 3, the light modulating member 20 further includes a first alignment film 23 and a second alignment film 24. The first alignment film 23 is located between the first electrode-equipped base member 30 and the liquid crystal layer 21. The second alignment film 24 is located between the second electrode-equipped base member 40 and the liquid crystal layer 21. The light modulating member 20 may include another functional layer (not illustrated) that is intended to achieve a specific function.

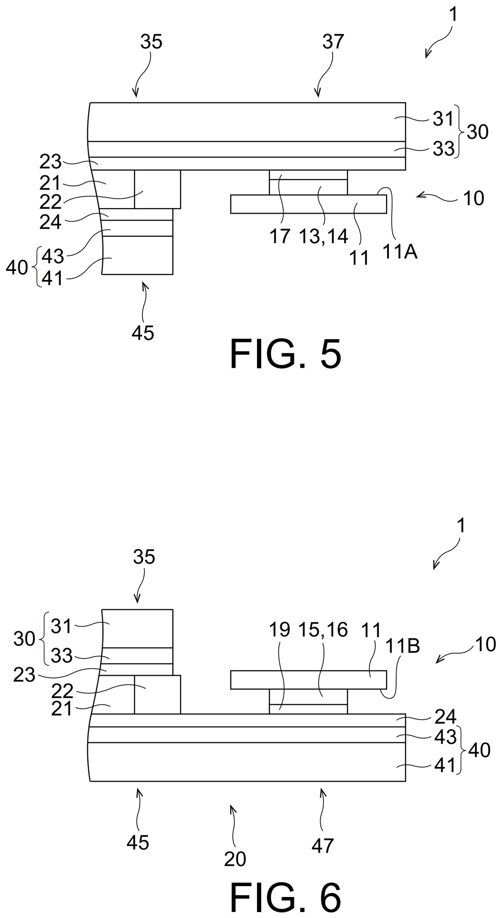

The first electrode-equipped base member 30 includes the first electrode 33 and a first base member 31 that supports the first electrode 33. The first electrode 33 extends along the first base member 31. The first electrode 33 is provided so as to face the liquid crystal layer 21. Fig. 4 is an enlarged view of a portion of the light modulating member 20 that is connected to the wiring substrate 10. As illustrated in Fig. 4, the first electrode-equipped base member 30 includes the first main portion 35 and the first terminal portion 37. The first main portion 35 faces the liquid crystal layer 21. The first terminal portion 37 extends from the first main portion 35. The first main portion 35 and the first terminal portion 37 are located on an identical plane. The first terminal portion 37 does not face the liquid crystal layer 21. Fig. 5 is a cross-sectional view of the wiring-substrate-equipped light modulating member 1 taken along line V-V of Fig. 1. As illustrated in Fig. 5, in the first terminal portion 37, the first electrode 33 is connected to the first connection portion 14 of the wiring substrate 10 through the first conductive adhesive layer 17. A resin sphere included in the first conductive adhesive layer 17 breaks through the first alignment film 23, and thus the first electrode 33 and the first connection portion 14 are connected. The resin sphere may be coated with a metal. The first terminal portion 37 can be connected to the first connection portion 14 without being hindered by the liquid crystal layer 21.

The second electrode-equipped base member 40 includes a second electrode 43 and a second base member 41 that supports the second electrode 43. The second electrode 43 extends along the second base member 41. The second electrode 43 is provided so as to face the liquid crystal layer 21. As illustrated in Fig. 4, the second electrode-equipped base member 40 includes the second main portion 45 and the second terminal portion 47. The second main portion 45 faces the liquid crystal layer 21. The second terminal portion 47 extends from the second main portion 45. The second main portion 45 and the second terminal portion 47 are located on an identical plane. The second terminal portion 47 does not face the liquid crystal layer 21. Fig. 6 is a cross-sectional view of the wiring-substrate-equipped light modulating member 1 taken along line VI-VI of Fig. 1. As illustrated in Fig. 6, in the second terminal portion 47, the second electrode 43 is connected to the second connection portion 16 of the wiring substrate 10 through the second conductive adhesive layer 19. A resin sphere included in the second conductive adhesive layer 19 breaks through the second alignment film 24, and thus the second electrode 43 and the second connection portion 16 are connected. The resin sphere may be coated with a metal. The second terminal portion 47 can be connected to the second connection portion 16 without being hindered by the liquid crystal layer 21.

In plan view of the light modulating member 20 illustrated in Figs. 1 and 4, the first terminal portion 37 and the second terminal portion 47 do not face each other. In other words, the first terminal portion 37 and the second terminal portion 47 are shifted from each other in plan view of the light modulating member 20. In still other words, the first terminal portion 37 is located at a position different from the second terminal portion 47 in plan view of the light modulating member 20. In the example illustrated in Figs. 1 and 4, a gap S is provided between the first terminal portion 37 and the second terminal portion 47 in plan view of the light modulating member 20. A length between the first terminal portion 37 and the second terminal portion 47 in plan view of the light modulating member 20 is, for example, equal to or more than 2 mm and equal to or less than 5 mm.

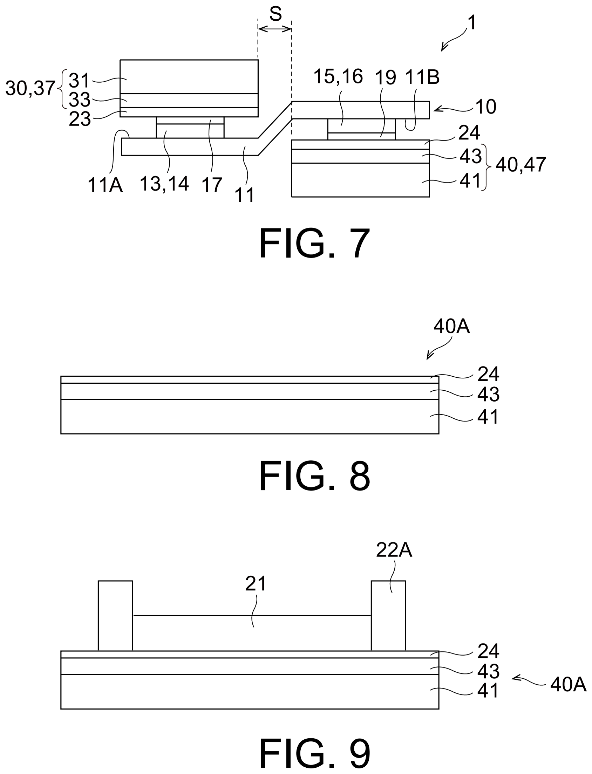

Fig. 7 is a cross-sectional view of the wiring-substrate-equipped light modulating member 1 taken along line VII-VII of Fig. 1. In a process for manufacturing the wiring-substrate-equipped light modulating member 1, a pressure can be applied between the first terminal portion 37 and the second terminal portion 47. A position where the first terminal portion 37 is provided and a position where the second terminal portion 47 is provided are different in a thickness direction of the wiring-substrate-equipped light modulating member 1 illustrated in Fig. 7. Accordingly, as illustrated in Fig. 7, the substrate 11 of the wiring substrate 10 can be curved or bent in a portion where the gap S between the first terminal portion 37 and the second terminal portion 47 is provided.

As illustrated in Fig. 1, the notch 11C of the substrate 11 and the gap S provided between the first terminal portion 37 and the second terminal portion 47 overlap in plan view of the light modulating member 20. By aligning the notch 11C with the gap S so that the notch 11C overlaps the gap S, the wiring substrate 10 and the light modulating member 20 are aligned with each other so that the first wiring 13 is connected to the first terminal portion 37 and the second wiring 15 is connected to the second terminal portion 47.

The first base member 31 and the second base member 41 appropriately support the first electrode 33 and the second electrode 43, respectively. The first base member 31 and the second base member 41 have a thin plate shape. The first base member 31 and the second base member 41 are transparent. A thickness of the first base member 31 and a thickness of the second base member 41 are preferably equal to or more than 30 µm and equal to or less than 250 µm so that the first base member 31 and the second base member 41 have good strength and optical characteristics. A material of the first base member 31 and the second base member 41 is, for example, glass, polyethylene terephthalate, triacetyl cellulose, polycarbonate, or cycloolefin polymer.

The term "transparent" means that the visible light transmittance is equal to or more than 40%, equal to or more than 70%, equal to or more than 80%, or equal to or more than 90%.

The first electrode 33 and the second electrode 43 are spaced apart from each other. The first electrode 33 and the second electrode 43 are not electrically directly connected. In the first terminal portion 37, the first electrode 33 is electrically connected to the first connection portion 14 at a position different from the second terminal portion 47 in plan view of the light modulating member 20. In the second terminal portion 47, the second electrode 43 is electrically connected to the second connection portion 16 at a position different from the first terminal portion 37 in plan view of the light modulating member 20. A voltage is applied to the first electrode 33 through the first wiring 13. A voltage is applied to the second electrode 43 through the second wiring 15. By changing the voltages applied to the first electrode 33 and the second electrode 43, the light modulating member 20 can adjust the visible light transmittance. The first electrode 33 and the second electrode 43 are transparent. The first electrode 33 and the second electrode 43 are, for example, a film made of Indium Tin Oxide (ITO) or a mesh made of copper.

As illustrated in Figs. 3 and 4, in plan view of the light modulating member 20, a peripheral edge 35E of the first main portion 35 at a position overlapping the second terminal portion 47 and a peripheral edge 45E of the second main portion 45 at a position overlapping the first terminal portion 37 are located on the seal member 22. In a cross section orthogonal to a longitudinal direction of the seal member 22, the peripheral edge 35E of the first main portion 35 at the position overlapping the second terminal portion 47 and the peripheral edge 45E of the second main portion 45 at the position overlapping the first terminal portion 37 are located between both ends of the seal member 22.

A peripheral edge of the first terminal portion 37 has a curved shape whose radius of curvature is equal to or more than 1 mm and equal to or less than 3 mm in a portion extending from the first main portion 35, in other words, in a base end portion 37p of the first terminal portion 37. In the example illustrated in Fig. 4, in a portion where the first terminal portion 37 extends from the first main portion 35, the peripheral edge of the first main portion 35 and the peripheral edge of the first terminal portion 37 are smoothly connected to form a shape recessed toward the peripheral edge of the first main portion 35 and the peripheral edge of the first terminal portion 37. For example, the peripheral edge of the first terminal portion 37 may have an arc shape or an elliptical arc shape. Similarly, the peripheral edge of the second terminal portion 47 has a curved shape whose radius of curvature is equal to or more than 1 mm and equal to or less than 3 mm in a portion extending from the second main portion 45, in other words, in a base end portion 47p of the second terminal portion 47. In a portion where the second terminal portion 47 extends from the second main portion 45, the peripheral edge of the second main portion 45 and the peripheral edge of the second terminal portion 47 are smoothly connected to form a shape recessed toward the peripheral edge of the second main portion 45 and the peripheral edge of the second terminal portion 47. For example, the peripheral edge of the second terminal portion 47 may have an arc shape or an elliptical arc shape.

The liquid crystal layer 21 contains a plurality of liquid crystal molecules. By applying a voltage to the first electrode 33 and the second electrode 43, an electric field is formed in the liquid crystal layer 21. The orientation of the liquid crystal molecules is changed by the electric field. The orientation of the liquid crystal molecules may be changed by changing the electric field formed in the liquid crystal layer 21, therefore, by changing the voltage applied to the first electrode 33 and the second electrode 43. A state of light passing through the liquid crystal layer 21 can change depending on the orientation of the liquid crystal molecules. A driving method of the liquid crystal molecules is not particularly limited, and may be a Vertical Alignment (VA) method, a Twisted Nematic (TN) method, an In Plane Switching (IPS) method, a Guest Host (GH) method, or a modified version of any of these methods.

The light modulating member 20 may further include two polarization plates provided so that the liquid crystal layer 21 is interposed therebetween depending on the driving method employed for the liquid crystal molecules of the liquid crystal layer 21. The first alignment film 23 and the second alignment film 24 may be omitted depending on the driving method employed for the liquid crystal molecules of the liquid crystal layer 21.

A case where the driving method of the liquid crystal molecules contained in the liquid crystal layer 21 is the GH method is described below as an example. According to the GH method, the liquid crystal layer 21 further contains a dichroic dye composition. According to the GH method, the orientation of the liquid crystal molecules and dichroic dye composition is regulated to horizontal orientation by the first alignment film 23 and the second alignment film 24 in a state where no voltage is applied to the first electrode 33 and the second electrode 43. As a result, the visible light transmittance of the liquid crystal layer 21 is low. The liquid crystal molecules and the dichroic dye composition approach orientation perpendicular to the first alignment film 23 and the second alignment film 24 due to an electric field in a state where a voltage is applied between the first electrode 33 and the second electrode 43. As a result, the visible light transmittance of the liquid crystal layer 21 is high. By changing the orientation of the liquid crystal molecules and the dichroic dye composition, the visible light transmittance of the liquid crystal layer 21 can be changed.

The orientation of the liquid crystal molecules and the dichroic dye composition may be regulated to vertical orientation by the first alignment film 23 and the second alignment film 24 in a state where no voltage is applied to the first electrode 33 and the second electrode 43, and the orientation of the liquid crystal molecules and the dichroic dye composition may approach horizontal orientation with respect to the first alignment film 23 and the second alignment film 24 due to an electric field in a state where a voltage is applied between the first electrode 33 and the second electrode 43. That is, the visible light transmittance of the liquid crystal layer 21 may be high in the state where no voltage is applied to the first electrode 33 and the second electrode 43, and the visible light transmittance of the liquid crystal layer 21 may be low in the state where a voltage is applied between the first electrode 33 and the second electrode 43.

The seal member 22 surrounds the liquid crystal layer 21. The seal member 22 sections the liquid crystal layer 21. The seal member 22 prevents leakage of the liquid crystal layer 21 and adheres to the first electrode-equipped base member 30 and the second electrode-equipped base member 40 to fix the first electrode-equipped base member 30 and the second electrode-equipped base member 40 to each other. A material of the seal member 22 is, for example, a thermosetting epoxy resin, an ultraviolet curable acrylic resin, or a thermally and ultraviolet curable epoxy-acrylic resin.

The first alignment film 23 and the second alignment film 24 regulate orientation of liquid crystal molecules in the liquid crystal layer 21. For example, the first alignment film 23 and the second alignment film 24 may be produced by performing a rubbing process on a resin layer such as polyimide, may be produced by irradiating a polymer film with linearly polarized ultraviolet light to selectively react polymer chains along a polarization direction based on a photoalignment method, or may be produced by molding a fine linear concavo-convex pattern produced through a rubbing process.

In the present embodiment, a ratio R1 of a sum of the thickness of the substrate 11 and the thickness of the first wiring 13 to a sum of the thickness of the first terminal portion 37, the thickness of the substrate 11, and the thickness of the first wiring 13 ((the sum of the thickness of the substrate 11 and the thickness of the first wiring 13) / (the sum of the thickness of the first terminal portion 37, the thickness of the substrate 11, and the thickness of the first wiring 13) ×100 (%)) may be equal to or more than 25% or may be equal to or more than 28%. The ratio R1 may be equal to or less than 62.5% or may be equal to or less than 61.7%.

A ratio R2 of a sum of the thickness of the substrate 11 and the thickness of the second wiring 15 to a sum of the thickness of the second terminal portion 47, the thickness of the substrate 11, and the thickness of the second wiring 15 ((the sum of the thickness of the substrate 11 and the thickness of the second wiring 15) / (the sum of the thickness of the second terminal portion 47, the thickness of the substrate 11, and the thickness of the second wiring 15) ×100 (%)) may be equal to or more than 25% or may be equal to or more than 28%. The ratio R2 may be equal to or less than 62.5% or may be equal to or less than 61.7%.

One of the ratios R1 and R2 may be equal to or more than 25% or both of the ratios R1 and R2 may be equal to or more than 25%. In a case where at least one of the ratios R1 and R2 is equal to or more than 25%, conduction failure is less likely to occur in the first terminal portion 37 or the second terminal portion 47 when the first terminal portion 37 or the second terminal portion 47 is bonded to the substrate 11 by application of heat and pressure (described later). One of the ratios R1 and R2 may be equal to or less than 62.5% or both of the ratios R1 and R2 may be equal to or less than 61.7%. In a case where at least one of the ratios R1 and R2 is equal to or less than 62.5%, flatness is maintained in the first terminal portion 37 or the second terminal portion 47.

The table below shows a relationship between the ratio R1 ((B) / [(A) + (B)] × 100 (%)) and conduction reliability obtained by changing the thickness of the first terminal portion 37 (A), the sum of the thickness of the substrate 11 and the thickness of the first wiring 13 (B). Specifically, the table below shows how conduction reliability changes as the ratio R1 changes in Examples 1 to 4. Note that in the table below, the thickness of the seal member 22 is constant (20 µm), and the thickness of the first conductive adhesive layer 17 is constant (10 µm). The conduction reliability indicates percentage of conduction failure that occurred in the first terminal portion 37 when the first terminal portion 37 was bonded to the substrate 11 by application of heat and pressure.

**[Table 1]**

| | (A) Thickness of first terminal portion 37 (µm) | (B) Sum of thickness of substrate 11 and thickness of first wiring 13 (µm) | Ratio R1 ((B) / [(A) + (B)] × 100 (%)) | Conduction reliability |
|---|---|---|---|---|
| Example 1 | 125 | 52 | 29.4 | Less than 10% |
| Example 2 | 188 | 128 | 40.5 | Less than 10% |
| Example 3 | 188 | 152 | 44.7 | Less than 10% |
| Example 4 | 188 | 52 | 21.7 | Equal to or more than 10% |

By making the ratio R1 equal to or more than 25%, preferably equal to or more than 28% as described above, conduction reliability obtained when the first terminal portion 37 is bonded to the substrate 11 by application of heat and pressure can be increased.

An example of a method for manufacturing the wiring-substrate-equipped light modulating member 1 is described. The method for manufacturing the wiring-substrate-equipped light modulating member 1 includes a step of producing a first plate member and a second plate member, a step of applying a seal material to the second plate member, a step of forming a liquid crystal layer, a step of superimposing the first plate member and the second plate member to form a laminated body, a step of cutting a part of the laminated body, and a step of attaching the wiring substrate 10.

The first plate member 30A and the second plate member 40A are produced. A step of producing the second plate member 40A is described as an example. The first plate member 30A can be produced by a step similar to that of the second plate member 40A. The second electrode 43 is formed on the second base member 41 by sputtering or the like. A composition that will form the second alignment film 24 is applied onto the second electrode 43. By imparting an alignment regulating force to the composition by rubbing, photo-alignment, or the like, the second alignment film 24 is formed. Through the above steps, the second plate member 40A such as the one illustrated in Fig. 8 is produced.

A seal material 22A is applied onto the second plate member 40A in a surrounding pattern. The seal material 22A is a viscous liquid material having adhesiveness or tackiness. The seal material 22A is cured to form the seal member 22. As illustrated in Fig. 9, a liquid crystal material containing liquid crystal molecules is supplied to a region on the second plate member 40A surrounded by the seal material 22A to form the liquid crystal layer 21.

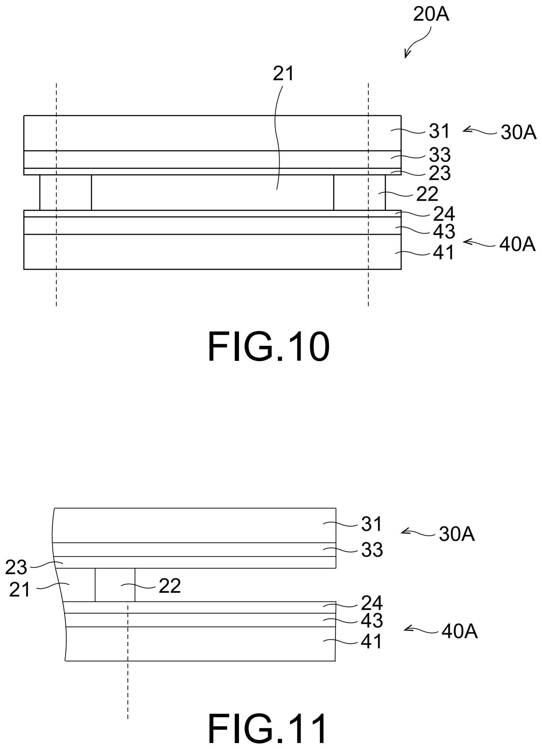

The first plate member 30A is laminated on the second plate member 40A under reduced pressure. The seal material 22A is deformed and cured to form the seal member 22, which joins the first plate member 30A and the second plate member 40A. Through the above steps, a laminated body 20A such as the one illustrated in Fig. 10 is produced. When the first plate member 30A is laminated on the second plate member 40A, a pressing and smoothing operation may be performed by using a roller or the like.

A part of the first plate member 30A and a part of the second plate member 40A are cut along the dotted lines illustrated in Fig. 10. Outer peripheral portions of the first plate member 30A and the second plate member 40A are removed. A part of the first plate member 30A and a part of the second plate member 40A are also cut at positions of the first plate member 30A and the second plate member 40A that will serve as the first terminal portion 37 and the second terminal portion 47. For example, a part of the second plate member 40A is cut along the dotted line illustrated in Fig. 11 at a position of the second plate member 40A that will form the second terminal portion 47. The first plate member 30A and the second plate member 40A at positions that will form the first terminal portion 37 and the second terminal portion 47 are cut at least partially on the seal member 22. The first plate member 30A and the second plate member 40A may be cut by using a tool such as a punching blade or a cutter or by using a laser cutting device. Through the above steps, the light modulating member 20 is produced.

The wiring substrate 10 is disposed on the light modulating member 20 so that the first connection portion 14 of the first wiring 13 faces the first terminal portion 37 and the second connection portion 16 of the second wiring 15 faces the second terminal portion 47. The light modulating member 20 and the wiring substrate 10 are easily aligned so that the first connection portion 14 of the first wiring 13 faces the first terminal portion 37 and the second connection portion 16 of the second wiring 15 faces the second terminal portion 47 by overlapping the gap S formed between the first terminal portion 37 and the second terminal portion 47 and the notch 11C of the substrate 11 each other. The first conductive adhesive layer 17 and the second conductive adhesive layer 19 exhibit electric conductivity and adhesiveness by application of heat and pressure to the first terminal portion 37 and the second terminal portion 47. In the first terminal portion 37, the first electrode 33 and the first connection portion 14 of the first wiring 13 are electrically connected through the first conductive adhesive layer 17. In the second terminal portion 47, the second electrode 43 and the second connection portion 16 of the second wiring 15 are electrically connected through the second conductive adhesive layer 19. Through the above steps, the wiring-substrate-equipped light modulating member 1 such as the one illustrated in Fig. 1 is manufactured.

In a case where a wiring of a wiring substrate is connected to a conventional light modulating member, a step of aligning and connecting a first electrode of the light modulating member and a first wiring of the wiring substrate and a step of aligning and connecting a second electrode of the light modulating member and a second wiring of the wiring substrate are performed. When a first connection portion of the first wiring provided on a first surface of a substrate is aligned with the first electrode so that the first connection portion is connected to the first electrode, a second connection portion of the second wiring provided on a second surface of the substrate moves. In the conventional light modulating member, a first terminal portion and a second terminal portion overlap each other or are adjacent to each other in plan view. In plan view, the first terminal portion and the second terminal portion are close. When the second electrode and the second connection portion are aligned after the first electrode and the first connection portion are aligned, the first electrode and the first connection portion are markedly shifted from each other. Thus, aligning and connecting an electrode and a wiring is complicated and time-consuming.

In the wiring-substrate-equipped light modulating member 1 according to the first embodiment, the first electrode 33 is electrically connected to the first connection portion 14 in the first terminal portion 37 at a position different from the second terminal portion 47 in plan view of the light modulating member 20. In plan view, the first terminal portion 37 and the second terminal portion 47 are spaced apart from each other. When the second electrode 43 and the second connection portion 16 are aligned after the first electrode 33 and the first connection portion 14 are aligned, the first electrode 33 and the first connection portion 14 are less likely to be shifted from each other. Similarly, when the first electrode 33 and the first connection portion 14 are aligned after the second electrode 43 and the second connection portion 16 are aligned, the second electrode 43 and the second connection portion 16 are less likely to be shifted from each other. In plan view of the light modulating member 20, the substrate 11 extends between the first terminal portion 37 and the second terminal portion 47. The first connection portion 14 and the second connection portion 16 on the substrate 11 can be simultaneously and stably aligned with the first electrode 33 and the second electrode 43, respectively. This makes it possible to easily connect the first wiring 13 and the second wiring 15 of the wiring substrate 10 to the light modulating member 20, thereby making it possible to easily manufacture the wiring-substrate-equipped light modulating member 1.

In plan view of the light modulating member 20, the peripheral edge 35E of the first main portion 35 at the position overlapping the second terminal portion 47 and the peripheral edge 45E of the second main portion 45 at the position overlapping the first terminal portion 37 are located on the seal member 22. The first plate member that will form the first electrode-equipped base member 30 is cut on the seal member 22 at a position overlapping the second terminal portion 47 in plan view of the light modulating member 20. The second plate member that will form the second electrode-equipped base member 40 is cut on the seal member 22 at a position overlapping the first terminal portion 37 in plan view of the light modulating member 20. When a part of the first plate member that will form the first electrode-equipped base member 30 and a part of the second plate member that will form the second electrode-equipped base member 40 are cut at the positions, an error in cutting depth of the first plate member and the second plate member can be tolerated by an amount corresponding to the thickness of the seal member 22. Liquid crystal molecules flowing from the liquid crystal layer 21 to the outside of the seal member 22 when a part of the first plate member that will form the first electrode-equipped base member 30 and a part of the second plate member that will form the second electrode-equipped base member 40 are cut can be easily removed. The light modulating member 20 can be easily manufactured.

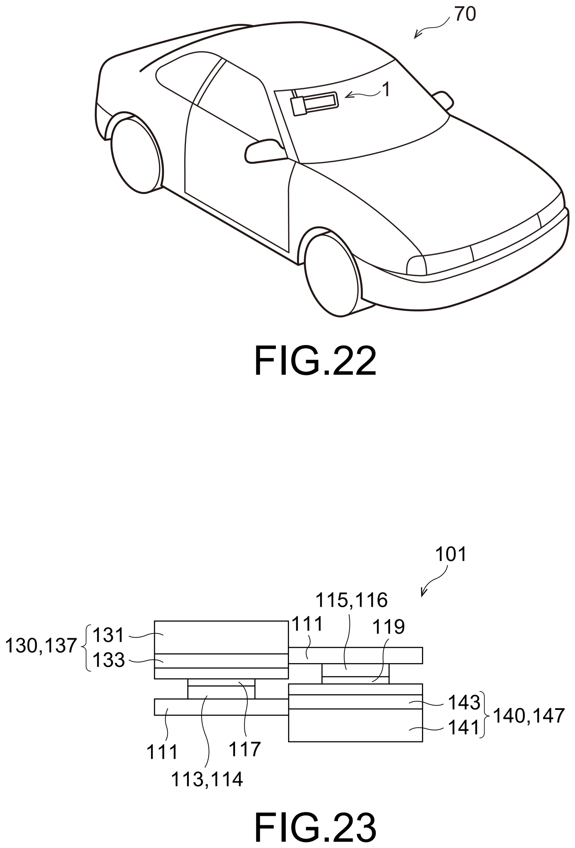

Fig. 23 illustrates an example in which no gap is provided between a first terminal portion 137 of a first electrode-equipped base member 30 and a second terminal portion 147 of a second electrode-equipped base member 40 and the first terminal portion 137 and the second terminal portion 147 are adjacent in plan view. In the example illustrated in Fig. 23, a first connection portion 114 of a first wiring 113 is connected to a first electrode 133 supported on a first base member 131 through a first conductive adhesive layer 117, and a second connection portion 116 of a second wiring 115 is connected to a second electrode 143 supported on a second base member 141 through a second conductive adhesive layer 119. In a process for manufacturing the wiring-substrate-equipped light modulating member 1, shear force is applied to a substrate 111 when the first terminal portion 137 and the second terminal portion 147 are heated and pressed, and thus the substrate 111 can be sheared between the first terminal portion 137 and the second terminal portion 147. In the wiring-substrate-equipped light modulating member 1 according to the first embodiment, the gap S is provided between the first terminal portion 37 and the second terminal portion 47 in plan view of the light modulating member 20. In a process for manufacturing the wiring-substrate-equipped light modulating member 1, the substrate 11 can be made less likely to be sheared between the first terminal portion 37 and the second terminal portion 47 when the first terminal portion 37 and the second terminal portion 47 are heated and pressed. In a process for manufacturing the wiring-substrate-equipped light modulating member 1, the gap S can serve as a clearance for a tool used in cutting a part of the first plate member 30A and a part of the second plate member 40A. The wiring-substrate-equipped light modulating member 1 can be easily manufactured.

The substrate 11 has the notch 11C between the position where the first connection portion 14 is provided and the position where the second connection portion 16 is provided. By aligning the notch 11C with the gap S so that the notch 11C overlaps the gap S, the wiring substrate 10 and the light modulating member 20 can be easily aligned with each other so that the first wiring 13 is connected to the first terminal portion 37 and the second wiring 15 is connected to the second terminal portion 47. The wiring-substrate-equipped light modulating member 1 can be easily manufactured.

The first terminal portion 37 has a curved shape whose radius of curvature is equal to or more than 1 mm and equal to or less than 3 mm in a portion extending from the first main portion 35. The second terminal portion 47 has a curved shape whose radius of curvature is equal to or more than 1 mm and equal to or less than 3 mm in a portion extending from the second main portion 45. It is possible to suppress occurrence of a situation where the first electrode-equipped base member 30 and the second electrode-equipped base member 40 are peeled off from the seal member 22 by application of excessive force to the portion of the first terminal portion 37 extending from the first main portion 35 and the portion of the second terminal portion 47 extending from the second main portion 45, for example, when a part of the first plate member 30A and a part of the second plate member 40A are cut.

### <Second Embodiment>

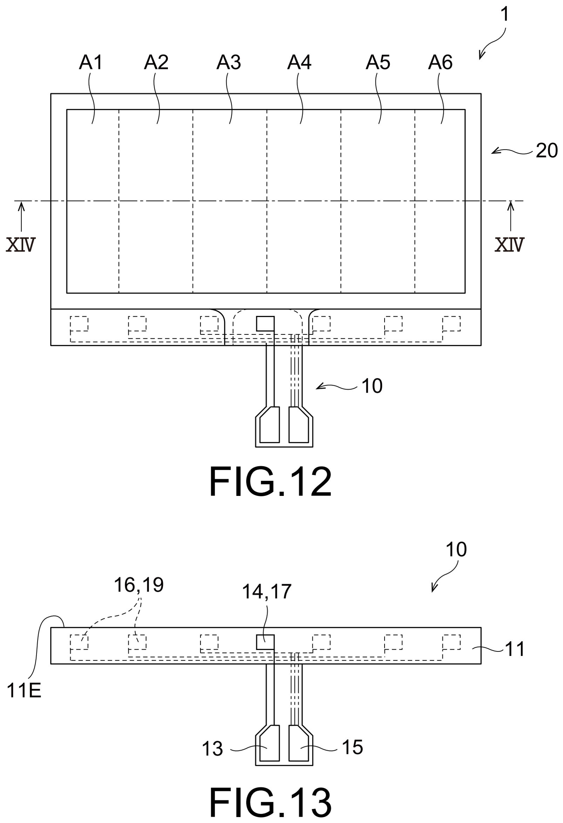

Fig. 12 is a plan view of a wiring-substrate-equipped light modulating member 1 according to a second embodiment. The wiring-substrate-equipped light modulating member 1 includes a light modulating member 20 and a wiring substrate 10.

In the second embodiment, the light modulating member 20 includes a plurality of sections that divide a position where a liquid crystal layer 21 is disposed in plan view. In the example illustrated in Fig. 12, the light modulating member 20 includes six sections, specifically, a first section A1, a second section A2, a third section A3, a fourth section A4, a fifth section A5, and a sixth section A6. In Fig. 12, boundaries between the sections are indicated by the dotted lines. In the example illustrated in Fig. 12, the sections A1 to A6 have substantially identical rectangular shapes and are aligned along one direction. The number, shape, and layout of the sections are not limited to the example illustrated in Fig. 12.

Fig. 13 is a plan view of the wiring substrate 10. As illustrated in Fig. 13, the wiring substrate 10 includes a substrate 11, a first wiring 13, and a second wiring 15. The first wiring 13 includes a first connection portion 14 provided on a first surface 11A of the substrate 11. The second wiring 15 includes a plurality of second connection portions 16 provided on a second surface 11B of the substrate 11. The number of second connection portions 16 is identical to the number of sections. The wiring substrate 10 further includes a first conductive adhesive layer 17 and a plurality of second conductive adhesive layers 19. The number of second conductive adhesive layers 19 is identical to the number of second connection portions 16. The first conductive adhesive layer 17 is provided on the first connection portion 14 and connects the first connection portion 14 to the light modulating member 20. The second conductive adhesive layers 19 are provided on the respective second connection portions 16 and connect the respective second connection portions 16 to the light modulating member 20.

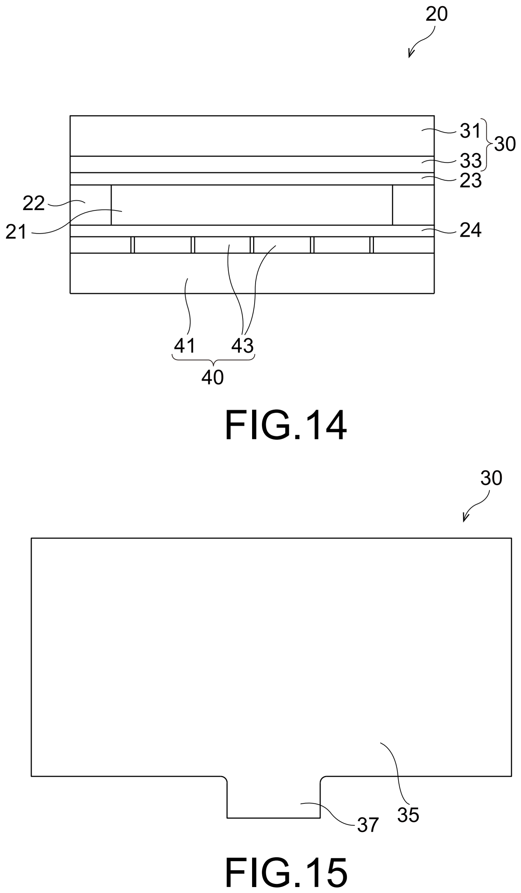

Fig. 14 is a cross-sectional view of the light modulating member 20 in the wiring-substrate-equipped light modulating member 1 taken along line XIV-XIV of Fig. 12. As illustrated in Fig. 14, the light modulating member 20 includes a first electrode-equipped base member 30, a second electrode-equipped base member 40, the liquid crystal layer 21, and a seal member 22. The first electrode-equipped base member 30 includes a first electrode 33 and a first base member 31. The second electrode-equipped base member 40 includes a plurality of second electrodes 43 and a second base member 41. The plurality of second electrodes 43 face the liquid crystal layer 21 and are independent in the respective sections. The number of second electrodes 43 is identical to the number of sections. The plurality of second electrodes 43 are disposed corresponding to the sections. The second base member 41 supports the plurality of second electrodes 43. In the example illustrated in Fig. 14, the light modulating member 20 further includes a first alignment film 23 and a second alignment film 24.

The light modulating member 20 can adjust visible light transmittance independently in each of the sections by changing voltages applied to the first electrode 33 and the second electrodes 43 in the respective sections. In the example illustrated in Fig. 12, the light modulating member 20 can take different visible light transmittances in the first section A1, the second section A2, the third section A3, the fourth section A4, the fifth section A5, and the sixth section A6.

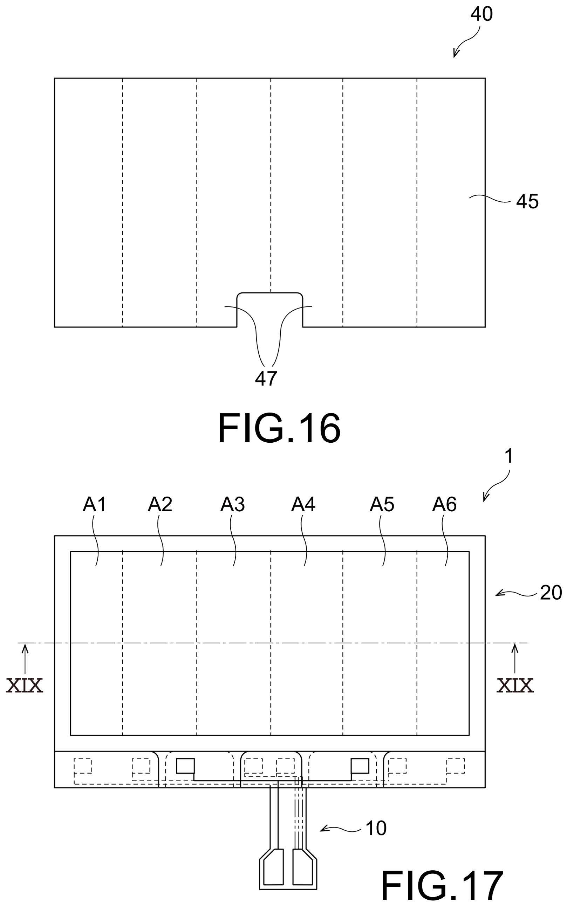

Fig. 15 is a plan view of the first electrode-equipped base member 30 in the light modulating member 20 according to the second embodiment. As illustrated in Fig. 15, the first electrode-equipped base member 30 includes a first main portion 35 and a first terminal portion 37. The first terminal portion 37 extends from the first main portion 35. Fig. 16 is a plan view of the second electrode-equipped base member 40 in the light modulating member 20 according to the second embodiment. The plurality of second electrodes 43 in the second electrode-equipped base member 40 are independently separated at the boundaries indicated by the dotted lines in Fig. 16. As illustrated in Fig. 16, the second electrode-equipped base member 40 includes a second main portion 45 and a plurality of second terminal portions 47. In the second terminal portions 47, the second electrodes 43 are independent in the respective sections, but the second base member 41 may be integral. The first main portion 35 and the second main portion 45 face the liquid crystal layer 21. The first terminal portion 37 and the plurality of second terminal portions 47 do not face the liquid crystal layer 21.

In plan view of the light modulating member 20 illustrated in Fig. 12, the first terminal portion 37 and the plurality of second terminal portions 47 do not face each other. In other words, the first terminal portion 37 and the plurality of second terminal portions 47 are shifted from each other in plan view of the light modulating member 20. In still other words, the first terminal portion 37 is located at a position different from the plurality of second terminal portions 47 in plan view of the light modulating member 20. In the first terminal portion 37, the first electrode 33 is electrically connected to the first connection portion 14 at a position different from the plurality of second terminal portions 47 in plan view of the light modulating member 20. In the plurality of second terminal portions 47, the plurality of second electrodes 43 are electrically connected to the corresponding plurality of second connection portions 16 at positions different from the first terminal portion 37 in plan view of the light modulating member 20.

As illustrated in Figs. 12 and 13, in the wiring substrate 10, the first connection portion 14 and the plurality of second connection portions 16 are arranged along one direction. The wiring substrate 10 is easily disposed on the light modulating member 20 so that the first connection portion 14 faces the first terminal portion 37 and the plurality of second connection portions 16 face the corresponding second terminal portions 47. This makes it possible to easily manufacture the wiring-substrate-equipped light modulating member 1.

The substrate 11 extends between the first terminal portion 37 and each of the plurality of second terminal portions 47 in plan view of the light modulating member 20. The substrate 11 extends between the plurality of second terminal portions 47 in plan view of the light modulating member 20. The first connection portion 14 and the plurality of second connection portions 16 on the substrate 11 can be simultaneously and stably aligned with the first electrode 33 and the plurality of second electrodes 43, respectively. This makes it possible to easily connect the first wiring 13 and the plurality of second wirings 15 of the wiring substrate 10 to the light modulating member 20, thereby making it possible to easily manufacture the wiring-substrate-equipped light modulating member 1.

In the example illustrated in Figs. 12 and 13, a peripheral edge 11E of the substrate 11 that faces a peripheral edge 35E of the first main portion 35 and a peripheral edge 45E of the second main portion 45 has a linear shape in plan view of the light modulating member 20. Such a wiring substrate 10 can be easily disposed between the first electrode-equipped base member 30 and the second electrode-equipped base member 40 without catching on the first electrode-equipped base member 30 and the second electrode-equipped base member 40. Therefore, the wiring substrate 10 can be easily disposed on the light modulating member 20. The wiring-substrate-equipped light modulating member 1 can be easily manufactured.

Although a width of the substrate 11 in a direction that is not parallel with the direction in which the first connection portion 14 and the plurality of second connection portions 16 are arranged is constant in the example illustrated in Figs. 12 and 13, the width need not be constant. A maximum width of the substrate 11 may be, for example, equal to or more than 5 mm and equal to or less than 40 mm or may be, for example, equal to or more than 5 mm and equal to or less than 30 mm. The maximum width of the substrate 11 is a maximum value of a length of the substrate 11 in a direction orthogonal to the direction in which the first connection portion 14 and the plurality of second connection portions 16 are arranged. The wiring substrate 10 can be easily handled due to the sufficient width of the substrate 11. The wiring substrate 10 can be easily disposed on the light modulating member 20. The wiring-substrate-equipped light modulating member 1 can be easily manufactured.

In the wiring-substrate-equipped light modulating member 1 according to the second embodiment, the light modulating member 20 is divided into the plurality of sections. The visible light transmittance can be adjusted independently in each of the sections. In the first terminal portion 37, the first electrode 33 is electrically connected to the first connection portion 14 at a position different from the plurality of second terminal portion 47 in plan view of the light modulating member 20. In the plurality of second terminal portions 47, the plurality of second electrodes 43 are electrically connected to the plurality of second connection portions 16 at positions different from the first terminal portion 37 in plan view of the light modulating member 20. In plan view, the first terminal portion 37 is spaced apart from the plurality of second terminal portions 47. When the second electrodes 43 and the second connection portions 16 are aligned with each other after the first electrode 33 and the first connection portion 14 are aligned with each other, the first electrode 33 and the first connection portion 14 are less likely to be shifted from each other. Similarly, when the first electrode 33 and the first connection portion 14 are aligned with each other after the second electrodes 43 and the second connection portions 16 are aligned with each other, the second electrodes 43 and the second connection portions 16 are less likely to be shifted from each other. This makes it possible to easily connect the first wiring 13 and the second wiring 15 of the wiring substrate 10 to the light modulating member 20, thereby making it possible to easily manufacture the wiring-substrate-equipped light modulating member 1.

### <Third Embodiment>

Fig. 17 is a plan view of the wiring-substrate-equipped light modulating member 1 according to a third embodiment. The wiring-substrate-equipped light modulating member 1 includes a light modulating member 20 and a wiring substrate 10.

In the third embodiment, the light modulating member 20 includes a plurality of sections that divide a position where the liquid crystal layer 21 is disposed in plan view, as in the second embodiment. In Fig. 17, boundaries between the sections are indicated by the dotted lines. In the example illustrated in Fig. 17, the light modulating member 20 includes six sections, specifically, a first section A1, a second section A2, a third section A3, a fourth section A4, a fifth section A5, and a sixth section A6.

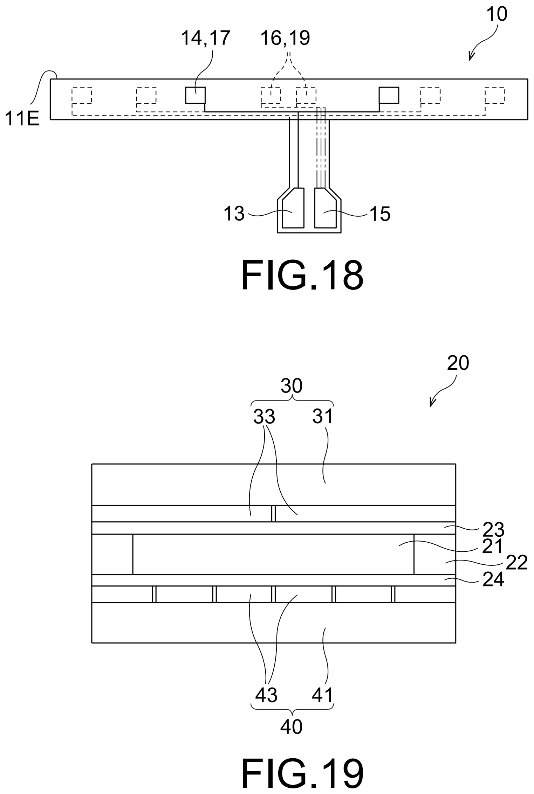

Fig. 18 is a plan view of the wiring substrate 10. As illustrated in Fig. 18, the wiring substrate 10 includes a substrate 11, a first wiring 13, and a second wiring 15. The first wiring 13 includes a plurality of first connection portions 14 provided on a first surface 11A of the substrate 11. The second wiring 15 includes a plurality of second connection portions 16 provided on a second surface 11B of the substrate 11. The number of second connection portions 16 is identical to the number of sections. The number of first connection portions 14 is smaller than the number of second connection portions 16. The wiring substrate 10 further includes a plurality of first conductive adhesive layers 17 and a plurality of second conductive adhesive layers 19. The number of first conductive adhesive layers 17 is identical to the number of first connection portions 14. The number of second conductive adhesive layers 19 is identical to the number of second connection portions 16. The first conductive adhesive layers 17 are provided on the respective first connection portions 14 and connect the respective first connection portions 14 to the light modulating member 20. The second conductive adhesive layers 19 are provided on the respective second connection portions 16 and connect the respective second connection portions 16 to the light modulating member 20.

Fig. 19 is a cross-sectional view of the light modulating member 20 in the wiring-substrate-equipped light modulating member 1 taken along line XIX-XIX of Fig. 17. As illustrated in Fig. 19, the light modulating member 20 includes a first electrode-equipped base member 30, a second electrode-equipped base member 40, a liquid crystal layer 21, and a seal member 22. The first electrode-equipped base member 30 includes a plurality of first electrodes 33 and a first base member 31. The second electrode-equipped base member 40 includes a plurality of second electrodes 43 and a second base member 41. The plurality of first electrodes 33 face the liquid crystal layer 21 and span one or more sections. The number of first electrodes 33 is smaller than the number of sections. The first base member 31 supports the plurality of first electrodes 33. The plurality of second electrodes 43 face the liquid crystal layer 21 and are independent in the respective sections. The number of second electrodes 43 is identical to the number of sections. The second base member 41 supports the plurality of second electrodes 43. In the example illustrated in Fig. 19, the light modulating member 20 further includes a first alignment film 23 and a second alignment film 24.

The light modulating member 20 can adjust visible light transmittance independently in each of the sections by changing voltages applied to the plurality of first electrodes 33 and the plurality of second electrodes 43. In the example illustrated in Fig. 17, the light modulating member 20 can take different visible light transmittances in the first section A1, the second section A2, the third section A3, the fourth section A4, the fifth section A5, and the sixth section A6.

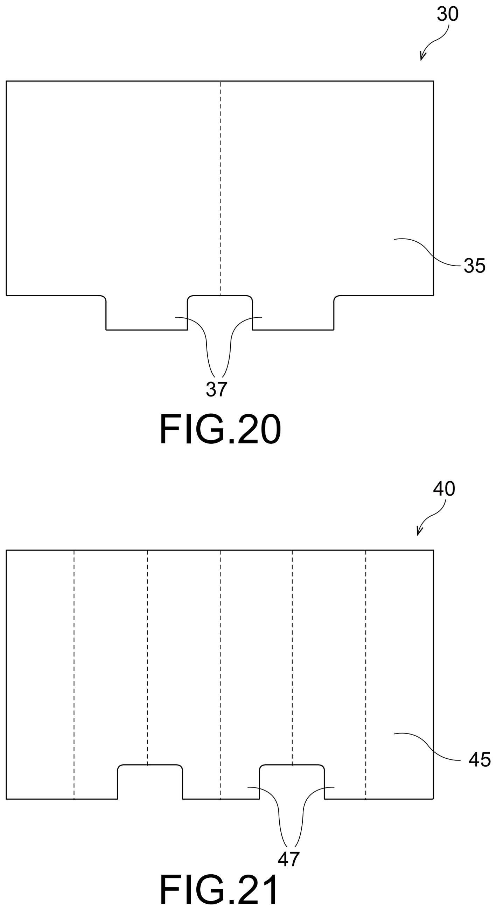

Fig. 20 is a plan view of the first electrode-equipped base member 30 in the light modulating member 20 according to the third embodiment. The plurality of first electrodes 33 in the first electrode-equipped base member 30 are independently separated at the boundary indicated by the dotted line in Fig. 20. As illustrated in Fig. 20, the first electrode-equipped base member 30 includes a first main portion 35 and a plurality of first terminal portions 37. The plurality of first terminal portions 37 extend from the first main portion 35. In the first terminal portions 37, the first electrodes 33 are independent of each other, but the first base member 31 may be integral. Fig. 21 is a plan view of the second electrode-equipped base member 40 in the light modulating member 20 according to the third embodiment. The plurality of second electrodes 43 in the second electrode-equipped base member 40 are independently separated at the boundaries indicated by the dotted lines in Fig. 21. As illustrated in Fig. 21, the second electrode-equipped base member 40 includes a second main portion 45 and a plurality of second terminal portions 47. In the second terminal portions 47, the second electrodes 43 are independent of each other in the respective sections, but the second base member 41 may be integral. The first main portion 35 and the second main portion 45 face the liquid crystal layer 21. The plurality of first terminal portions 37 and the plurality of second terminal portions 47 do not face the liquid crystal layer 21.

In plan view of the light modulating member 20 illustrated in Fig. 17, the plurality of first terminal portions 37 and the plurality of second terminal portions 47 do not face each other. In other words, the plurality of first terminal portions 37 and the plurality of second terminal portions 47 are shifted from each other in plan view of the light modulating member 20. In still other words, the plurality of first terminal portions 37 are located at positions different from the plurality of second terminal portions 47 in plan view of the light modulating member 20. In the plurality of first terminal portions 37, the plurality of first electrodes 33 are electrically connected to the first connection portions 14 at positions different from the plurality of second terminal portions 47 in plan view of the light modulating member 20. In the plurality of second terminal portions 47, the plurality of second electrodes 43 are electrically connected to the corresponding plurality of second connection portions 16 at positions different from the plurality of first terminal portions 37 in plan view of the light modulating member 20.

In the wiring-substrate-equipped light modulating member 1 according to the third embodiment, the light modulating member 20 is divided into the plurality of sections. Visible light transmittance can be adjusted independently for each of the sections. In the plurality of first terminal portions 37, the plurality of first electrodes 33 are electrically connected to the first connection portions 14 at positions different from the plurality of second terminal portions 47 in plan view of the light modulating member 20. Connection between the first electrodes 33 and the first connection portions 14 is less likely to be hindered by the plurality of second terminal portions 47. In the plurality of second terminal portions 47, the plurality of second electrodes 43 are electrically connected to the plurality of second connection portions 16 at positions different from the plurality of first terminal portions 37 in plan view of the light modulating member 20. Connection between the plurality of second electrodes 43 and the plurality of second connection portions 16 is less likely to be hindered by the plurality of first terminal portions 37. This makes it possible to easily connect the first wiring 13 and the second wiring 15 of the wiring substrate 10 to the light modulating member 20, thereby making it possible to easily manufacture the wiring-substrate-equipped light modulating member 1.

Fig. 22 is a perspective view of a mobile body 70 including the wiring-substrate-equipped light modulating member 1 according to any of the embodiments. In the example illustrated in Fig. 22, the light modulating member 20 is used as a sun visor. In the example illustrated in Fig. 22, the mobile body 70 is an automobile. The sun visor is located at a position facing a windshield of the mobile body 70. The sun visor reduces sunlight and the like entering the mobile body 70 through the windshield and provides good visibility for occupants of the automobile. The mobile body 70 is not limited to the example illustrated in Fig. 22, and may be a ship, a railroad vehicle, an airplane, or the like.

Although the embodiments have been described above while referring to specific examples, the specific examples do not limit the embodiments. The above embodiments may be implemented in other various specific examples, and various omissions, substitutions, changes, additions, and the like may be made without departing from the gist of the present disclosure.

## Claims

1. A wiring-substrate-equipped light modulating member comprising:
a light modulating member; and
a wiring substrate connected to the light modulating member, wherein
the light modulating member includes a first electrode-equipped base member, a second electrode-equipped base member, a liquid crystal layer located between the first electrode-equipped base member and the second electrode-equipped base member, and a seal member that surrounds the liquid crystal layer,
the first electrode-equipped base member includes a first electrode that faces the liquid crystal layer and a first base member that supports the first electrode,
the second electrode-equipped base member includes a second electrode that faces the liquid crystal layer and a second base member that supports the second electrode,
the light modulating member is capable of adjusting visible light transmittance by changing voltages applied to the first electrode and the second electrode,
the wiring substrate includes a substrate having a first surface and a second surface opposite to the first surface, a first wiring including a first connection portion provided on the first surface of the substrate, and a second wiring including a second connection portion provided on the second surface of the substrate,
the first electrode-equipped base member includes a first main portion that faces the liquid crystal layer and a first terminal portion that extends from the first main portion,
the second electrode-equipped base member includes a second main portion that faces the liquid crystal layer and a second terminal portion that extends from the second main portion,
in the first terminal portion, the first electrode is electrically connected to the first connection portion at a position different from the second terminal portion in plan view of the light modulating member,
in the second terminal portion, the second electrode is electrically connected to the second connection portion at a position different from the first terminal portion in plan view of the light modulating member, and
the substrate extends between the first terminal portion and the second terminal portion in plan view of the light modulating member.

2. The wiring-substrate-equipped light modulating member according to claim 1, wherein
a peripheral edge of the first main portion at a position overlapping the second terminal portion and a peripheral edge of the second main portion at a position overlapping the first terminal portion are located on the seal member in plan view of the light modulating member.

3. The wiring-substrate-equipped light modulating member according to claim 1, wherein
a gap is provided between the first terminal portion and the second terminal portion in plan view of the light modulating member.

4. The wiring-substrate-equipped light modulating member according to claim 1, wherein
the substrate has a notch between a position where the first connection portion is provided and a position where the second connection portion is provided.

5. The wiring-substrate-equipped light modulating member according to claim 1, wherein
a peripheral edge of the first terminal portion has a curved shape whose radius of curvature is equal to or more than 1 mm and equal to or less than 3 mm in a portion extending from the first main portion, and
a peripheral edge of the second terminal portion has a curved shape whose radius of curvature is equal to or more than 1 mm and equal to or less than 3 mm in a portion extending from the second main portion.

6. The wiring-substrate-equipped light modulating member according to claim 1, wherein
the light modulating member further includes a first alignment film located between the first electrode-equipped base member and the liquid crystal layer,
the first electrode is connected to the first connection portion of the wiring substrate through a first conductive adhesive layer, and
a resin sphere included in the first conductive adhesive layer breaks through the first alignment film, so that the first electrode and the first connection portion are connected.

7. The wiring-substrate-equipped light modulating member according to claim 1, wherein
a ratio of a sum of a thickness of the substrate and a thickness of the first wiring to a sum of a thickness of the first terminal portion, the thickness of the substrate, and the thickness of the first wiring is equal to or more than 25%, or
a ratio of a sum of the thickness of the substrate and a thickness of the second wiring to a sum of a thickness of the second terminal portion, the thickness of the substrate, and the thickness of the second wiring is equal to or more than 25%.

8. A wiring-substrate-equipped light modulating member comprising:
a light modulating member; and
a wiring substrate connected to the light modulating member, wherein
the light modulating member includes a first electrode-equipped base member, a second electrode-equipped base member, a liquid crystal layer located between the first electrode-equipped base member and the second electrode-equipped base member, and a seal member that surrounds the liquid crystal layer,
the light modulating member includes a plurality of sections that divide a position where the liquid crystal layer is disposed in plan view,
the first electrode-equipped base member includes a first electrode that faces the liquid crystal layer and a first base member that supports the first electrode,
the second electrode-equipped base member includes a plurality of second electrodes that face the liquid crystal layer and are independent in the respective sections and a second base member that supports the plurality of second electrodes,
the light modulating member is capable of adjusting visible light transmittance independently in each of the sections by changing voltages applied to the first electrode and the second electrodes in the respective sections,
the wiring substrate includes a substrate that has a first surface and a second surface opposite to the first surface, a first wiring including a first connection portion provided on the first surface of the substrate, and a second wiring including a plurality of second connection portions provided on the second surface of the substrate,
the first electrode-equipped base member includes a first main portion that faces the liquid crystal layer and a first terminal portion that extends from the first main portion,
the second electrode-equipped base member includes a second main portion that faces the liquid crystal layer and a plurality of second terminal portions that extend from the second main portion in the respective sections,
in the first terminal portion, the first electrode is electrically connected to the first connection portion at a position different from the plurality of second terminal portions in plan view of the light modulating member, and
in the plurality of second terminal portions, the plurality of second electrodes are electrically connected to the respective plurality of second connection portions at positions different from the first terminal portion in plan view of the light modulating member.

9. The wiring-substrate-equipped light modulating member according to claim 8, wherein
the substrate extends between the first terminal portion and each of the plurality of second terminal portions in plan view of the light modulating member.

10. The wiring-substrate-equipped light modulating member according to claim 8, wherein
the substrate extends between the plurality of second terminal portions in plan view of the light modulating member.

11. The wiring-substrate-equipped light modulating member according to claim 8, wherein
a peripheral edge of the substrate that faces a peripheral edge of the first main portion and a peripheral edge of the second main portion has a linear shape in plan view of the light modulating member.

12. The wiring-substrate-equipped light modulating member according to claim 8, wherein
the first connection portion and the plurality of second connection portions are arranged along one direction.

13. The wiring-substrate-equipped light modulating member according to claim 8, wherein
a maximum width of the substrate is equal to or more than 5 mm and equal to or less than 40 mm.

14. The wiring-substrate-equipped light modulating member according to claim 8, wherein
a ratio of a sum of a thickness of the substrate and a thickness of the first wiring to a sum of a thickness of the first terminal portion, the thickness of the substrate, and the thickness of the first wiring is equal to or more than 25%, or
a ratio of a sum of the thickness of the substrate and a thickness of the second wiring to a sum of a thickness of the second terminal portion, the thickness of the substrate, and the thickness of the second wiring is equal to or more than 25%.

15. A wiring-substrate-equipped light modulating member comprising:
a light modulating member; and
a wiring substrate connected to the light modulating member, wherein
the light modulating member includes a first electrode-equipped base member, a second electrode-equipped base member, a liquid crystal layer located between the first electrode-equipped base member and the second electrode-equipped base member, and a seal member that surrounds the liquid crystal layer,
the light modulating member includes a plurality of sections that divide a position where the liquid crystal layer is disposed in plan view,
the first electrode-equipped base member includes a plurality of first electrodes that face the liquid crystal layer and a first base member that supports the plurality of first electrodes,
the second electrode-equipped base member includes a plurality of second electrodes that face the liquid crystal layer and are independent in the respective sections and a second base member that supports the plurality of second electrodes,
the light modulating member is capable of adjusting visible light transmittance independently for each of the sections by changing voltages applied to the first electrodes and the second electrodes in the respective sections,
the number of first electrodes is smaller than the number of second electrodes,
the wiring substrate includes a substrate that has a first surface and a second surface opposite to the first surface, a first wiring including a plurality of first connection portions provided on the first surface of the substrate, and a second wiring including a plurality of second connection portions provided on the second surface of the substrate,
the first electrode-equipped base member includes a first main portion that faces the liquid crystal layer and a plurality of first terminal portions that extend from the first main portion,
the second electrode-equipped base member includes a second main portion that faces the liquid crystal layer and a plurality of second terminal portions that extend from the second main portion in the respective sections,
in the plurality of first terminal portions, the plurality of first electrodes are electrically connected to the plurality of first connection portions at positions different from the plurality of second terminal portions in plan view of the light modulating member, and
in the plurality of second terminal portions, the plurality of second electrodes are electrically connected to the respective plurality of second connection portions at positions different from the first terminal portion in plan view of the light modulating member.
